# NEW EUROPEAN PATENT SPECIFICATION

(11) **EP 0 986 902 B2**
(45) Date of publication and mention of the opposition decision: **17.05.2006**
(45) Mention of the grant of the patent: 28.08.2002
(21) Application number: 98926328.0
(22) Date of filing: 05.06.1998
(51) Int. Cl.: H04N 5/445, H04N 7/088

(54) **SYSTEM AND METHOD FOR CHANGING PROGRAM GUIDE FORMAT**
SYSTEM UND VERFAHREN ZUR ÄNDERUNG DES PROGRAMMZEITSCHRIFTENFORMATS
SYSTEME ET PROCEDE PERMETTANT DE MODIFIER LE FORMAT D'UN GUIDE DES PROGRAMMES

(30) Priority: 06.06.1997 US 48879 P
(43) Date of publication of application: 22.03.2000
(73) Proprietor: THOMSON CONSUMER ELECTRONICS, INC., Indianapolis, IN 46290-1024 (US)
(72) Inventor: SCHNEIDEWEND, Daniel, Richard, Fishers, IN 46038 (US); McLANE, Michael, Joseph, Indianapolis, IN 46240 (US); BROWN, Megan, Louise, Carmel, IN 46033 (US); WESTLAKE, Mark, Sheridan, Fishers, IN 46038 (US)
(74) Representative: Kohrs, Martin
(86) International application number: PCT/US1998/011635
(87) International publication number: WO 1998/056172

(56) References cited:
- EP-A2- 0 682 452
- EP-A2- 0 721 253
- WO-A-94/14282
- WO-A-95/32585
- WO-A-95/32587
- DE-C1- 4 405 020
- US-A- 5 539 479
- BRUGLIERA V: "DIGITAL ON-SCREEN DISPLAY A NEW TECHNOLOGY FOR THE CONSUMER INTERFACE" CABLE TV SESSIONS, MONTREUX, JUNE 10 - 15, 1993, no. SYMP. 18, 11 June 1993, pages 571-586, XP000379382 POSTES;TELEPHONES ET TELEGRAPHES SUISSES

## Description

### FIELD OF INVENTION

This invention generally relates to the field of program guide information processing and more particularly, to a system and method of changing a program guide format.

### BACKGROUND OF INVENTION

Electronic devices such as televisions and personal computers (PC) require a control system that includes a user interface system. Typically, a user interface provides information to a user and simplifies use of the device. One example of a user interface is an Electronic Program Guide (EPG) in a television system.

An EPG is an interactive, on-screen display feature that displays information analogous to TV listings found in local newspapers or other print media. In addition, an EPG also includes information necessary for collating and decoding programs. An EPG provides information about each program within the time frames covered by the EPG which typically ranges from the next hour up to seven days. The information contained in an EPG includes programming characteristics such as channel number, program title, start time, end time, elapsed time, time remaining, rating (if available), topic, theme, and a brief description of the program's content. EPGs are usually arranged in a two-dimensional table or grid format with time information on one axis and channel information on the other axis.

Unlike non-interactive guides that reside on a dedicated channel and merely scroll through the current programming on the other channels for the next 2 to 3 hours, EPGs allow viewers to select any channel at any time during some period into the future, e.g., up to seven days forward. Further EPG features include the ability to highlight individual cells of the grid containing program information. Once highlighted, the viewer can perform functions pertaining to that selected program. For instance, the viewer could instantly switch to that program if it is currently being aired. Viewers could also program one touch video cassette recording (VCR) or the like if the television is properly configured and connected to a recording device. Such EPGs are known in the art and described, for instance, in US Pat. Nos. 5,353,121; 5,479,268; and 5,479,266 issued to Young et al. and assigned to StarSight Telecast, Inc.

In addition, US Pat. No. 5,515,106, issued to Chaney et al., and assigned to the same assignee of the present invention, describes in detail an exemplary embodiment including data packet structure necessary to implement an exemplary program guide system. The exemplary data packet structure is designed so that both the channel information (e.g., channel name, call letters, channel number, type, etc.) and the program description information (e.g., title, rating, star, etc.) relating to a program may be transmitted from a program guide database provider to a receiving apparatus efficiently.

User interfaces such as EPGs are applicable to analog and digital television systems and to other electronic devices such as personal computers. As electronic devices become increasingly complex with a multitude of features, the need for a robust and easy-to-use user interface becomes evermore important. For example, separate electronic systems having respective interfaces for controlling features of each system are now being combined into a single system requiring a single user interface. One specific example is the so-called PCTV which includes features of both a personal computer and a television. The user interface system for such a device must provide both clear communication of computer and television related information and provide for simple control of both computer and television related features.

One problem with an EPG system is that an EPG may occupy a complete screen of a display. This prevents the viewer from watching a program or accessing an internet site while the viewer is also using and searching through an EPG.

Prior EPG systems for dealing with this problem include having a small picture-in-picture (PIP) window to display the program being watched while the user is using and searching through an EPG. However, since a PIP window is typically very small, it is hard for the user to be able to see clearly the image being shown in the PIP window.

WO 95/32585 describes an electronic program schedule system for receiving television schedule information and promotional information via a satellite. In order to accommodate the promotional information, the system displays program schedule information in different formats on a screen. The changing of the program schedule information format is responsive only to the data sent from the head end equipment. The end user at the receiving end has no control of the program schedule format being displayed.

### SUMMARY OF THE INVENTION

Therefore, the present inventors recognized that it is desirable to be able to provide user control of the size of a program guide. The inventors also recognized that by being able to selectively change the size of a program guide, it allows other information such as, for example, a live video program, an internet web site, or a more detailed description of a selected program to be displayed simultaneously with the program guide. This allows a user to "surf" through the guide without missing the program or other pertinent information about the program being selected by the user.

In accordance with the present invention, an apparatus and a method for processing program guide data received at a receiver are disclosed having the following. A first signal is derived from the program guide data, the first signal representing a program guide in a first format. The first format comprises successive time intervals along one dimension and a plurality of channels along another dimension. A second signal is produced representing the program guide in a second format in response to a control signal caused by a user of the receiver. The second format is a truncated version of the first format, comprising fewer channels and/or time intervals than the first format. The second format can be truncated further by an additional number of channels and/or time intervals in response to a user input.

In another aspect of the invention, the apparatus and method of processing the program guide include the further capability of displaying a video image or a detailed description corresponding to a selected program concurrently with the truncated program guide.

In addition, another aspect of the invention relates to displaying a truncated program guide in translucent form so that viewers can watch a full screen of program while using the guide.

### BRIEF DESCRIPTION OF THE DRAWINGS

In the drawing:
Fig. 1 shows an example of a television system suitable for processing program guide information in accordance with the present invention.
Fig. 2. shows an example of a digital video processing apparatus suitable for providing different formats of a program guide in accordance with the present invention.
Fig. 3 shows a block diagram of a specific implementation of a digital satellite system suitable for processing and displaying program guide data information in accordance with the present invention.
Figs. 4 and 5 show a flowchart, in accordance with the present invention for receiving and processing program guide data information and user selection options to display different formats of a program guide according to the present invention.
Fig. 6 shows an example of a program guide being displayed in a first size according to the present invention.
Fig. 7 shows an example of a program guide being displayed in a second size, with a more detailed description of a selected program being displayed concurrently on the screen according to the present invention.
Fig. 8 shows another example of a program guide being displayed in a second size, with a video image corresponding to a highlighted or selected program being displayed concurrently on a display screen according to the present invention.
Fig. 9 shows how a truncated guide may be selectively expanded according to the present invention.
Fig. 10 shows how another truncated guide may be selectively expanded according to the present invention.
Fig. 11 shows another format of a program guide according to the present invention.
Fig. 12 shows a block diagram of a video decoding portion of a MPEG decoder according to the present invention.
Fig. 13 shows a block diagram of an OSD/video combiner for use in a video decoder according to the present invention.

### DETAILED DESCRIPTION

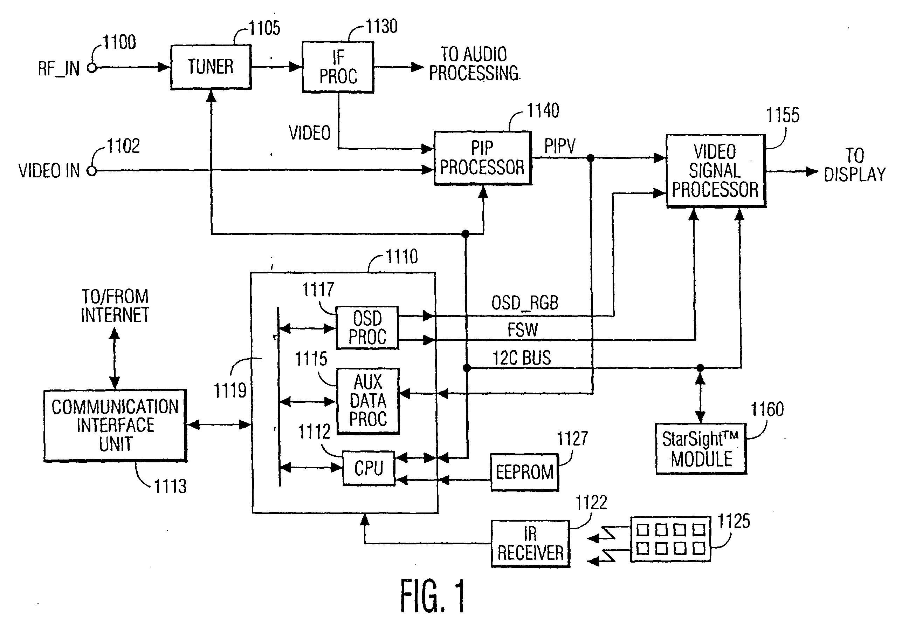

Fig. 1 shows an example of a television system suitable for providing different electronic program guide formats in accordance with the present invention. The television receiver shown in Fig. 1 is capable of processing both analog NTSC television signals and internet information. The system shown in FIG. 1 has a first input 1100 for receiving television signal RF_IN at RF frequencies and a second input 1102 for receiving baseband television signal VIDEO IN. Signal RF_IN may be supplied from a source such as an antenna or cable system while signal VIDEO IN may be supplied, for example, by a video cassette recorder (VCR). Tuner 1105 and IF processor 1130 operate in a conventional manner for tuning and demodulating a particular television signal that is included in signal RF_IN. IF processor 1130 produces baseband video signal VIDEO representing the video program portion of the tuned television signal. IF processor 1130 also produces a baseband audio signal that is coupled to an audio processing section (not shown in FIG. 1) for further audio processing. Although FIG. 1 shows input 1102 as a baseband signal, the television receiver could include a second tuner and IF processor similar to units 1105 and 1130 for producing a second baseband video signal from either signal RF_IN or from a second RF signal source.

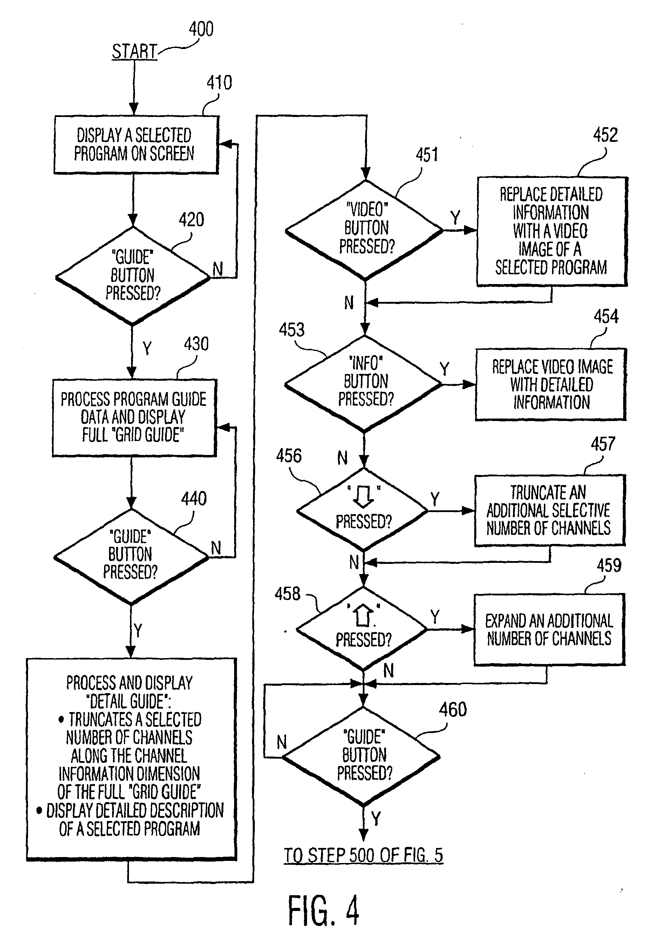

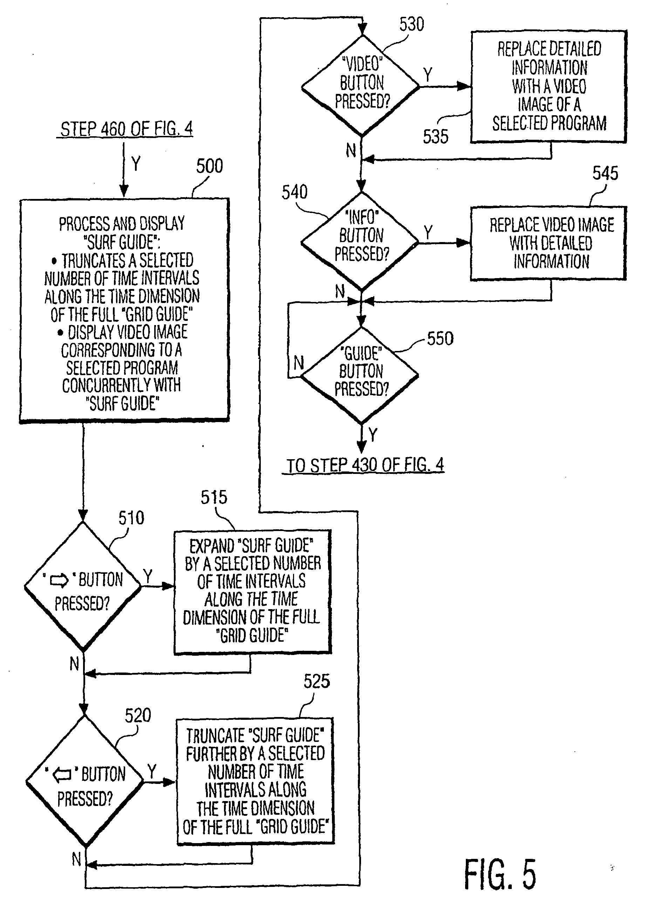

The system shown in FIG. 1 also includes a main microprocessor (mP) 1110 for controlling components of the television receiver such as tuner 1105, picture-in-picture processing unit 1140, video signal processor 1155, and StarSight® data processing module 1160. As used herein, the term "microprocessor" represents various devices including, but not limited to, microprocessors, microcomputers, microcontrollers and controllers. Microprocessor 1110 controls the system by sending and receiving both commands and data via serial data bus I²C BUS which utilizes the well-known I²C serial data bus protocol. More specifically, central processing unit (CPU) 1112 within mP 1110 executes control programs contained within memory, such as EEPROM 1127 shown in FIG. 1, in response to commands provided by a user, e.g., via IR remote control 1125 and IR receiver 1122. For example, activation of a "CHANN EL UP" feature on remote control 1125 causes CPU 1112 to send a "change channel" command along with channel data to tuner 1105 via I²C BUS. As a result, tuner 1105 tunes the next channel in the channel scan list. Another example of a control program stored in EEPROM 1127 is software for implementing the operations shown in Figs. 4-5 to be discussed below and in accordance with the present invention.

Main microprocessor 1110 also controls the operation of a communications interface unit 1113 for providing the capability to upload and download information to and from the internet. Communication interface unit 1113 includes, for example, a modem for connecting to an internet service provider, e.g., via a telephone line or via a cable television line. The communication capability allows the system shown in Figure 1 to provide email capability and internet related features such as web browsing in addition to receiving television programming.

CPU 1112 controls functions included within mP 1110 via bus 1119 within mP 1110. In particular, CPU 1112 controls auxiliary data processor 1115 and on-screen display (OSD) processor 1117. Auxiliary data processor 1115 extracts auxiliary data such as Star-Sight® data from video signal PIPV.

StarSight® data which provides program guide data information in a known format is typically received only on a particular television channel and the television receiver must tune that channel to extract StarSight® data. To prevent StarSight® data extraction from interfering with normal use of the television receiver, CPU 1112 initiates StarSight® data extraction by tuning the particular channel only during a time period when the television receiver is usually not in use (e.g., 2:00 AM). At that time, CPU 1112 configures decoder 1115 such that auxiliary data is extracted from horizontal line intervals such as line 16 that are used for StarSight® data. CPU 1112 controls the transfer of extracted StarSight® data from decoder 1115 via I²C BUS to StarSight® module 1160. A processor internal to the module formats and stores the data in memory within the module. In response to the StarSight® EPG display being activated (e.g., a user activating a particular key on remote control 125), CPU 1112 transfers formatted StarSight® EPG display data from StarSight® module 1160 via I²C BUS to OSD processor 1117.

OSD processor 1117 operates in a conventional manner to produce R, G, and B video signals OSD_RGB that, when coupled to a display device, will produce a displayed image representing on-screen display information such as graphics and/or text comprising an EPG. OSD processor 1117 also produces control signal FSW which is intended to control a fast switch for inserting signals OSD_RGB into the system's video output signal at times when an on-screen display is to be displayed. For example, when a user enables an EPG, e.g., by activating a particular switch on remote control 1125, CPU 1112 enables processor 1117. In response, processor 1117 produces signals OSD_RGB representing the program guide data information previously extracted and already stored in memory, as discussed above. Processor 1117 also produces signal FSW indicating when the EPG is to be displayed.

Video signal processor (VSP) 1155 performs conventional video signal processing functions, such as luma and chroma processing. Output signals produced by VSP 1155 are suitable for coupling to a display device, e.g., a kinescope or LCD device (not shown in FIG. 1), for producing a displayed image. VSP 1155 also includes a fast switch for coupling signals produced by OSD processor 1,117 to the output video signal path at times when graphics and/or text is to be included in the displayed image. The fast switch is controlled by control signal FSW which is generated by OSD processor 1117 in main microprocessor 1110 at times when text and/or graphics are to be displayed.

The input signal for VSP 1155 is signal PIPV that is output by picture-in-picture (PIP) processor 1140. When a user activates PIP mode, signal PIPV represents a large picture (large pix) into which a small picture (small pix) is inset. When PIP mode is inactive, signal PIPV represents just the large pix, i.e., no small pix signal is included in signal PIPV. PIP processor 1140 provides the described functionality in a conventional manner using features included in unit 1140 such as a video switch, analog-to-digital converter (ADC), RAM, and digital to analog converter (DAC).

For an EPG display, the display data included in the EPG display is produced by OSD processor 1117 and included in the output signal by VSP 1155 in response to fast switch signal FSW. When controller 1110 detects activation of the EPG display, e.g., when a user presses an appropriate key on remote control 1125, controller 1110 causes OSD processor 1117 to produce the EPG display using information such as program guide data from StarSight® module 1160. Controller 1110 causes VSP 1155 to combine the EPG display data from OSD processor 1117 and the video image signal in response to signal FSW to produce a display including EPG. The EPG can occupy all or only a portion of the display area as to be described later.

When the EPG display is active, controller 1110 executes a control program stored in EEPROM 1127. The control program monitors the location of a position indicator, such as a cursor and/or highlighting, in the EPG display. A user controls the location of the position indicator using direction and selection keys of remote control 1125. Alternatively, the system could include a mouse device. Controller 1110 detects activation of a selection device, such as clicking a mouse button, and evaluates current cursor location information in conjunction with EPG data being displayed to determine the function desired, e.g., tuning a particular program. Controller 1110 subsequently activates the control action associated with the selected feature.

The processing and displaying of a program guide in accordance with the present invention may be implemented using a combination of software and hardware. For example, referring to Figure 1, display of an EPG may be implemented by software routine in memory such as EEPROM 1127 to be described later and shown in Figs. 4-5 for generating different EPG formats. Activation of an EPG, e.g., by a user pressing an EPG related button on remote control 1125, causes CPU 1112 to execute the EPG software routine. As part of generating an EPG display, CPU 1112 also accesses EPG data and graphics that may be stored in StarSight module 1160 via the 12C bus. Under control of the EPG software routine stored in EEPROM 1127, CPU 1112 enables OSD processor 1117 which formats the EPG data into a form suitable for producing an OSD representing the EPG data and graphics. The OSD data produced by OSD processor 1117 is coupled to video signal processor (VSP) 1155 via signal lines OSD_RGB. A fast switch in VSP 1155 couples the EPG OSD data to the output of VSP 1155 under control of signal FSW. That is, the software routine (to be described later) being executed by CPU 1112 determines when the EPG data is to be displayed (e.g., what portion of the display) and sets signal FSW to the appropriate state for causing the fast switch to couple the EPG data to the output.

An exemplary embodiment of the features of the system shown in FIG. 1 that have been described thus far comprises an ST9296 microprocessor produced by SGS-Thomson Microelectronics for providing the features associated with mP 1110; an M65616 picture-in-picture processor produced by Mitsubishi for providing the described basic PIP functionality associated with PIP processor 1140; and an LA7612 video signal processor produced by Sanyo for providing the functions of VSP 1155.

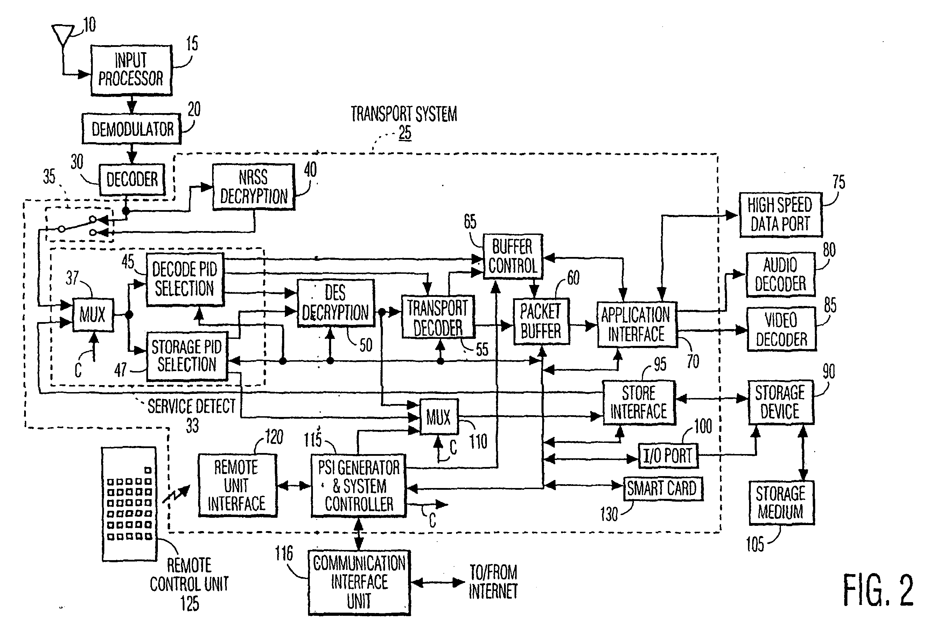

Fig. 2 shows another example of an electronic device capable of processing program guide information to form a program guide in accordance with the present invention. As described below, the system shown in Figure 2 is an MPEG compatible system for receiving MPEG encoded transport streams representing broadcast programs. However, the system shown in Figure 2 is exemplary only. User interface systems are also applicable to othertypes of digital signal processing devices including non-MPEG compatible systems, involving other types of encoded datastreams. For example, other devices include digital video disc (DVD) systems and MPEG program streams, and systems combining computer and television functions such as the so-called "PCTV". Further, although the system described below is described as processing broadcast programs, this is exemplary only. The term 'program' is used to represent any form of packetized data such as telephone messages, computer programs, internet data or other communications, for example.

In overview, in the video receiver system of Figure 2, a carrier modulated with video data is received by antenna 10 and processed by unit 15. The resultant digital output signal is demodulated by demodulator 20 and decoded by decoder 30. The output from decoder 30 is processed by transport system 25 which is responsive to commands from remote control unit 125. System 25 provides compressed data outputs for storage, further decoding, or communication to other devices.

Video and audio decoders 85 and 80 respectively, decode the compressed data from system 25 to provide outputs for display. Data port 75 provides an interface for communication of the compressed data from system 25 to other devices such as a computer or High Definition Television (HDTV) receiver, for example. Storage device 90 stores the compressed data from system 25 on storage medium 105. Device 90, in a playback mode also supports retrieval of the compressed data from storage medium 105 for processing by system 25 for decoding, communication to other devices orstorage on a different storage medium (not shown to simplify drawing).

Considering Figure 2 in detail, a carrier modulated with video data received by antenna 10, is converted to digital form and processed by input processor 15. Processor 15 includes radio frequency (RF) tuner and intermediate frequency (IF) mixer and amplification stages for down-converting the input video signal to a lower frequency band suitable for further processing. The resultant digital output signal is demodulated by demodulator 20 and decoded by decoder 30. The output from decoder 30 is further processed by transport system 25.

Multiplexer (mux) 37 of service detector 33 is provided, via selector 35, with either the output from decoder 30, or the decoder 30 output further processed by a descrambling unit 40. Descrambling unit 40 may be, for example, a removable unit such as a smart card in accordance with ISO 7816 and NRSS (National Renewable Security Standards) Committee standards (the NRSS removable conditional access system is defined in EIA Draft Document IS-679, Project PN-3639). Selector 35 detects the presence of an insertable, compatible, descrambling card and provides the output of unit 40 to mux 37 only if the card is currently inserted in the video receiver unit. Otherwise selector 35 provides the output from decoder 30 to mux 37. The presence of the insertable card permits unit 40 to descramble additional premium program channels, for example, and provide additional program services to a viewer. It should be noted that in the preferred embodiment NRSS unit 40 and smart card unit 130 (smart card unit 130 is discussed later) share the same system 25 interface such that only either an NRSS card or a smart card may be inserted at any one time. However, the interfaces may also be separate to allow parallel operation.

The data provided to mux 37 from selector 35 is in the form of an MPEG compliant packetized transport datastream as defined in MPEG systems standard section 2.4 and includes program guide information and the data content of one or more program channels. The individual packets that comprise particular program channels are identified by Packet Identifiers (PIDs). The transport stream contains Program Specific Information (PSI) for use in identifying the PIDs and assembling individual data packets to recover the content of all the program channels that comprise the packetized datastream. Transport system 25, under the control of the system controller 115, acquires and collates program guide information from the input transport stream, storage device 90 or an internet service provider via the communication interface unit 116. The individual packets that comprise either particular program channel content or Program Guide information, are identified by their Packet Identifiers (PIDs) contained within header information.

The user interface incorporated in the video receiver shown in Figure 2 enables a user to activate various features by selecting a desired feature from an on-screen display (OSD) menu. The OSD menu may include an electronic program guide (EPG) as described above and other features discussed below. Data representing information displayed in the OSD menu is generated by system controller 115 in response to stored program guide information, stored graphics information, and/or program guide and graphics information received via the input as described above and in accordance with a software control program to be shown in Figs. 4-5 and to be discussed below. The software control program may be stored, for example, in embedded memory (not shown) of system controller 115.

Using remote control unit 125 (or other selection means such as a mouse) a user can select from the OSD menu items such as a program to be viewed, a program to be stored, the type of storage media and manner of storage. System controller 115 uses the selection information, provided via interface 120, to configure system 25 to select the programs for storage and display and to generate PSI suitable for the selected storage device and media. Controller 115 configures system 25 elements 45, 47, 50, 55, 65 and 95 by setting control register values within these elements via a data bus and by selecting signal paths via muxes 37 and 110 with control signal C.

In response to control signal C, mux 37 selects either, the transport stream from unit 35, or in a playback mode, a datastream retrieved from storage device 90 via store interface 95. In normal, non-playback operation, the data packets comprising the program that the user selected to view are identified by their PIDs by selection unit 45. If an encryption indicator in the header data of the selected program packets indicates the packets are encrypted, unit 45 provides the packets to decryption unit 50. Otherwise unit 45 provides non-encrypted packets to transport decoder 55. Similarly, the data packets comprising the programs that the user selected for storage are identified by their PIDs by selection unit 47. Unit 47 provides encrypted packets to decryption unit 50 or non-encrypted packets to mux 110 based on the packet header encryption indicator information.

The functions of decryptors 40 and 50 may be implemented in a single removable smart card which is compatible with the NRSS standard. This approach places all security related functions in one removable unit that can easily be replaced if a service provider decides to change encryption technique or to permit easily changing the security system, e.g., to descramble a different service.

Units 45 and 47 employ PID detection filters that match the PIDs of incoming packets provided by mux 37 with PID values pre-loaded in control registers within units 45 and 47 by controller 115. The pre-loaded PIDs are used in units 47 and 45 to identify the data packets that are to be stored and the data packets that are to be decoded for use in providing a video image. The pre-loaded PIDs are stored in look-up tables in units 45 and 47. The PID look-up tables are memory mapped to encryption key tables in units 45 and 47 that associate encryption keys with each pre-loaded PID. The memory mapped PID and encryption key look-up tables permit units 45 and 47 to match encrypted packets containing a pre-loaded PID with associated encryption keys that permit their decryption. Non-encrypted packets do not have associated encryption keys. Units 45 and 47 provide both identified packets and theirassociated encryption keys to decryptor 50. The PID look-up table in unit 45 is also memory mapped to a destination table that matches packets containing pre-loaded PIDs with corresponding destination buffer locations in packet buffer 60. The encryption keys and destination buffer location addresses associated with the programs selected by a user for viewing or storage are pre-loaded into units 45 and 47 along with the assigned PIDs by controller 115. The encryption keys are generated by ISO 7816-3 compliant smart card system 130 from encryption codes extracted from the input datastream. The generation of the encryption keys is subject to customer entitlement determined from coded information in the input datastream and/or pre-stored on the insertable smart card itself (International Standards Organization document ISO 7816-3 of 1989 defines the interface and signal structures for a smart card system).

The packets provided by units 45 and 47 to unit 50 are encrypted using an encryption technique such as Data Encryption Standard (DES) defined in Federal Information Standards (FIPS) Publications 46, 74 and 81 provided by the National Technical Information Service, Department of Commerce. Unit 50 decrypts the encrypted packets using corresponding encryption keys provided by units 45 and 47 by applying decryption technique appropriate for the selected encryption algorithm. The decrypted packets from unit 50 and the non-encrypted packets from unit 45 that comprise the program for display are provided to decoder 55. The decrypted packets from unit 50 and the non-encrypted packets from unit 47 that comprise the program for storage are provided to mux 110.

Unit 60 contains four packet buffers accessible by controller 115. One of the buffers is assigned to hold data destined for use by controller 115 and the other three buffers are assigned to hold packets that are destined for use by application devices 75, 80 and 85. Access to the packets stored in the four buffers within unit 60 by both controller 115 and by application interface 70 is controlled by buffer control unit 65. Unit 45 provides a destination flag to unit 65 for each packet identified by unit 45 for decoding. The flags indicate the individual unit 60 destination locations for the identified packets and are stored by control unit 65 in an internal memory table. Control unit 65 determines a series of read and write pointers associated with packets stored in buffer 60 based on the First-In-First-Out (FIFO) principle. The write pointers in conjunction with the destination flags permit sequential storage of an identified packet from units 45 or 50 in the next empty location within the appropriate destination buffer in unit 60. The read pointers permit sequential reading of packets from the appropriate unit 60 destination buffers by controller 115 and application interface 70.

The non-encrypted and decrypted packets provided by units 45 and 50 to decoder 55 contain a transport header as defined by section 2.4.3.2 of the MPEG systems standard. Decoder 55 determines from the transport header whether the non-encrypted and decrypted packets contain an adaptation field (per the M PEG systems standard). The adaptation field contains timing information including, for example, Program Clock References (PCRs) that permit synchronization and decoding of content packets. Upon detection of a timing information packet, that is a packet containing an adaptation field, decoder 55 signals controller 115, via an interrupt mechanism by setting a system interrupt, that the packet has been received. In addition, decoder 55 changes the timing packet destination flag in unit 65 and provides the packet to unit 60. By changing the unit 65 destination flag, unit 65 diverts the timing information packet provided by decoder 55 to the unit 60 buffer location assigned to hold data for use by controller 115, instead of an application buffer location.

Upon receiving the system interrupt set by decoder 55, controller 115 reads the timing information and PCR value and stores it in internal memory. PCR values of successive timing information packets are used by controller 115 to adjust the system 25 master clock (27 MHz). The difference between PCR based and master clock based estimates of the time interval between the receipt of successive timing packets, generated by controller 115, is used to adjust the system 25 master clock. Controller 115 achieves this by applying the derived time estimate difference to adjust the input control voltage of a voltage controlled oscillator used to generate the mas-terclock. Controller 115 resets the system interrupt after storing the timing information in internal memory.

Packets received by decoder 55 from units 45 and 50 that contain program content including audio, video, caption, and other information, are directed by unit 65 from decoder 55 to the designated application device buffers in packet buffer 60. Application control unit 70 sequentially retrieves the audio, video, caption and other data from the designated buffers in buffer 60 and provides the data to corresponding application devices 75, 80 and 85. The application devices comprise audio and video decoders 80 and 85 and high speed data port 75. For example, packet data corresponding to a composite program guide generated by the controller 115 as described above, may be transported to the video decoder 85 for formatting into video signal suitable for display on a monitor (not shown) connected to the video decoder 85. Also, for example, data port 75 may be used to provide high speed data such as computer programs, for example, to a computer. Alternatively, port 75 may be used to output data to an HDTV decoder to display images corresponding to a selected program or a program guide, for example.

Packets that contain PSI information are recognized by unit 45 as destined for the controller 115 buffer in unit 60. The PSI packets are directed to this buffer by unit 65 via units 45, 50 and 55 in a similar manner to that described for packets containing program content. Controller 115 reads the PSI from unit 60 and stores it in internal memory.

Controller 115 also generates condensed PSI (CPSI) from the stored PSI and incorporates the CPSI in a packetized datastream suitable for storage on a selectable storage medium. The packet identification and direction is governed by controller 115 in conjunction with the unit 45 and unit 47 PID, destination and encryption key look-up tables and control unit 65 functions in the manner previously described.

In addition, controller 115 is coupled to a communication interface unit 116 that operates in a manner similarto interface unit 1113 in Figure 1. That is, unit 116 provides the capability to upload and download information to and from the internet. Communication interface unit 116 includes, for example, a modem for connecting to an internet service provider, e.g., via a telephone line or via a cable television line. The communication capability allows the system shown in Figure 2 to provide email capability and internet related features such as web browsing in addition to receiving television programming.

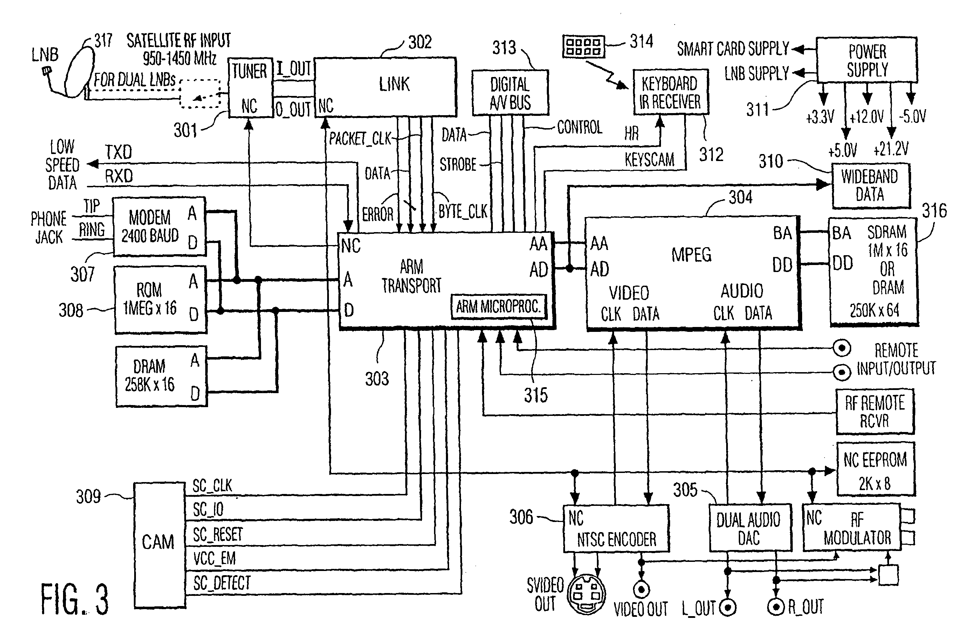

Fig. 3 is a specific implementation of an electronic device generally shown in Fig. 2 and described in detail above. Fig. 3 represents a satellite receiver set-top box, designed and manufactured by Thomson Consumer Electronics, of Indianapolis, Indiana, USA, for receiving DirecTV™ satellite service provided by Hughes Electronics.

As shown in Fig. 3, the set-top box has a tuner 301 which receives and tunes applicable satellite RF signals in the range of 950-1450 Mhz from a satellite antenna 317. The tuned analog signals are outputted to a link module 302 for further processing. Link module 302 is responsible for further processing of the analog tuned signals I_out and Q_out from tuner 301, including filtering and conditioning of the analog signals, and conversion of the analog signals into a digital output signal, DATA. The link module 302 is implemented as an integrated circuit (IC). The link module IC is manufactured by SGS-Thomson Microelectronics of Grenoble, France, and has Part No. ST 15339-610.

The digital output, DATA, from the link module 302 consists of compliant packetized data stream recognized and processable by the transport unit 303. The datastream, as discussed in detail in relation to Fig. 2, includes program guide data information and the data content of one or more program channels of the satellite broadcast service from DirecTV™.

The function of the transport unit 303 is the same as the transport system 25 shown in Fig. 2 and discussed already. As described above, the transport unit 303, processes the packetized datastream according to the Packet Identifiers (PID) contained in the header information. The processed datastream is then formatted into MPEG compatible, compressed audio and video packets and coupled to a MEPG decoder 304 for further processing.

The transport unit 303 is controlled by an Advanced RISC Microprocessor (ARM) 315 which is a RISC based microprocessor. The ARM processor 315 executes a control program (shown in Figs. 4-5) which reside in ROM 307 to control the transport unit and to process the applicable program guide information in accordance with aspects of the present invention as will be discussed below.

The transport unit 303 may be implemented as an integrated circuit. For example, a preferred embodiment of the transport unit is an IC manufactured by SGS-Thomson Microelectronics having Part No. ST 15273-810 or 15103-65C.

The MEPG compatible, compressed audio and video packets from the transport unit 303 are delivered to a MEPG decoder 304. The MPEG decoder decodes the compressed MPEG datastream from the transport unit 303. The decoder 304 then outputs the applicable audio stream which can be further processed by the audio digital-to-analog converter (DAC) 305 to convert the digital audio data into analog sound. The decoder 304 also outputs applicable digital video data which represents image pixel information to a NTSC encoder 306. The NTSC encoder 306 then further processes this video data into NTSC compatible analog video signal so that video images may be displayed on a regular NTSC television screen. The MPEG decoder as described above may be implemented as an integrated circuit. An example of a preferred embodiment of the MPEG decoder is an IC manufactured by SGS-Thomson Microelectronics having Part No. ST 13520.

Additional relevant functional blocks of Fig. 3 includes modem 307 which corresponds to the communication interface unit 16 shown in Fig. 2 for access to the internet, for example. Conditional Access Module 309, corresponds to the NRSS decryption unit 130 shown in Fig. 2 for providing conditional access information. Wideband data module 310 corresponds to High Speed Data Port 75 shown in Fig. 2 for providing high speed data access to, for example, a HDTV decoder or a computer. A keyboard/IR Receiver module 312 corresponds to Remote Unit interface 120 shown in Fig. 2 for receiving user control commands from a user control unit 314. Digital AV bus module 313 corresponds to I/O port 100 shown in Fig. 2 for connection to an external device such as a VCR or a DVD player.

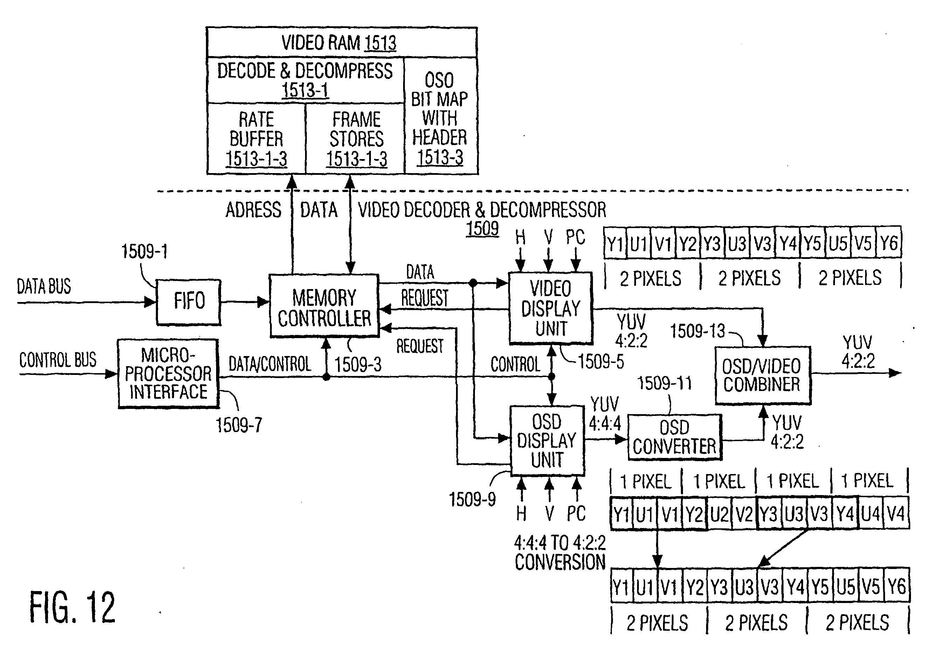

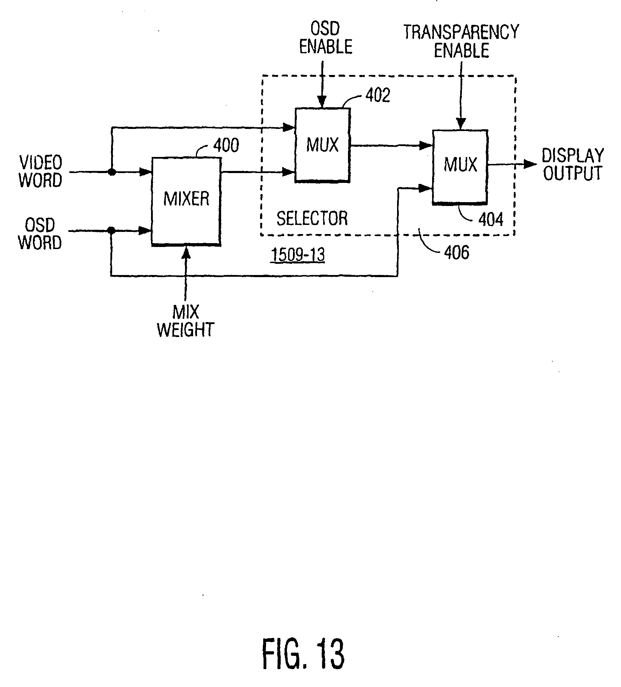

Details of the video decoding portion of the MPEG decoder 304 will now be described below, with reference to Figs. 12 and 13. While the details of the portions of video decoder 1509 concerned with the decoding and decompression of the video data packets is not necessary to understanding the OSD provisions, the following brief description of those portions is helpful.

As shown in Fig. 12, video decoder 1509 includes a FIFO (first in, first out) buffer memory 1509-1 which receives video data packets on demand in relatively small segments from transport unit 303 and which couples them in relatively larger segments via a memory controller 1509-3 to a section 1513-1 of video RAM 1513 reserved for decoding and decompression. Video RAM 1513 may be a portion of SDRAM 316 shown in Fig. 3 and is addressed under the control of memory controller 1509-3. Decoding and decompression section 1513-1 of RAM 1513 includes a rate buffer section 1513-1-3 for storing the received video data packets and a frame store section 1513-1-5 for storing frames of video information during the decoding and decompression operation. A video image display unit 1509-5 decodes and decompresses the stored video data packets to form the sequence of video image component representative digital words (Y, U, V). For this purpose, video display unit 1509-5 requests data from decoding and decompression section 1513-1 of video RAM 1513 via memory controller 1509-3 as required. The generation of the component representative digital words is synchronized with the field (V), line (H) and pixel (PC) rate signals generated by television signal encoder 1515. Control data generated by microprocessor 315 is received by a microprocessor interface unit 1509-7 and coupled to various portions of video decoder 1509 via an internal control bus.

The number of bits contained in the video image component representative digital words determine the number of possible levels and thereby the resolution of the respective components. For n-bit words there are 2ⁿ possible levels corresponding to the 2ⁿ possible binary states. By way of example, in the present embodiment, the video image component representative words each contains eight bits and therefore each component can have 2⁸ or 256 possible levels. The se-quence of video image component representative digital words is organized in groups of components in which each group corresponds to plurality of pixels in subsampled or compressed form. More specifically, in the present embodiment, the video image representative groups correspond to two pixels, each of which includes a first luminance representative digital word (Y₁) corresponding to a first pixel, a second luminance representative digital word (Y₂) corresponding to a second pixel, and a single pair of color difference representative digital words (U_{1,2} and V_{1,2}) corresponding to each of the first and second pixels. This has been referred to as a "4:2:2" format in the digital video signal processing field. The subsampling orcompression of the color difference signals relates to the image data compression which occurs in the transmitter 1 for the purpose of reducing the transmission bandwidth. More specifically, the transmitted image data is organized in what is known as 4:2:0 format in which the image representative words correspond to four pixels in which there are four luminance representative words corresponding to respective ones of four pixels and a single pair of color difference representative words corresponding to each of the four pixels. The 4:2:0 image representative groups are converted to 4:2:2 image representative groups by interpolation within video display unit 1509-5. A complete set (4:4:4) of components for each pixel is produced by interpolation within television signal encoder 306.

The OSD portion of video decoder 1509 includes an OSD controller 1509-9 which cooperates with an OSD section 1513-3 of video RAM 1513. The graphics representative bit map generated by microprocessor 315 is coupled via microprocessor interface unit 1509-7 and memory controller 1509-3 to OSD section 1513-3 of RAM 1513 for storage. For each pixel of the graphic image there is a digital word representing a color for that pixel. The number of bits contained in the color representative digital words determines how many different colors each pixel can have. If the color representative words contain n bits, then each pixel can have any one of 2ⁿ colors corresponding to the 2ⁿ possible binary states of the n-bit color word. By way of example, in the present embodiment, the color representative words contain two bits. Accordingly, each graphics pixel can have any one of four colors corresponding to the four possible binary states (00, 01, 10, and 11) of the two-bit color word. The pixel color information is organized in a component form in which for each color word there is a unique group of component representative digital words. The components are selected to be the same as the components used for the transmission of video image information: namely, luminance (Y) and a pair of color difference signals (U and V). The selection of the same components for video images and graphics images simplifies the OSD arrangement because it avoids the need for conversion from one set of components to another. For example, in the present embodiment which utilizes two-bit colorwords, the following relationship between the color representative digital words and the groups of component representative digital words exists:

| color | group of components |
|---|---|
| 00 | Y_{A}, U_{A}, V_{A} |
| 01 | Y_{B}, U_{B}, V_{B} |
| 10 | Y_{C}, U_{C}, V_{C} |
| 11 | Y_{D}, U_{D}, V_{D} |

The actual color (represented by the subscripts A, B, C or D in the table) of a graphics pixel depends on the value represented by component representative digital words of the respective group. By way of example, in the present embodiment, the U and V graphic image component representative words each contain four bits and the Y graphic image component representative word contains six bits. Four-bit component representative words provide 16 possible levels for the U and V components and the six bit word provides 64 possible levels for the Y component. The four or six bits represent the most significant bits of an eight-bit word which is eventually formed by OSD display unit 1509-9, as will be described below.

In addition, a "transparency" value (also referred to as a mix weight) defines the degree of transparency for the graphics pixels. The value is a four-bit word that corresponds to sixteen different levels of transparency, i.e., the amount of background (video image) that shows through the OSD graphics.

The graphic image component representative words and the transparency value are transmitted to and stored in OSD section 1513-3 of RAM 1513 from microprocessor 315 in component groups within a header for the bit map. In the present embodiment, in which graphic image component representative digital word for luminance contains six bits and each graphic image component representative word for color difference contains four bits, each group includes 14 bits. The colors of a graphics image may be changed by changing the bits of one or more component representing words of the header, depending on the nature of the graphics image to be displayed.

The OSD section 1513-3 of RAM 1513 contains a plurality of such OSD bit maps that define a comprehensive OSD graphic image. Consequently, each OSD graphic is a collection of bit map regions containing transparent graphic pixels and opaque graphic pixels that provide a flexible display of OSD graphics.

OSD display unit 1509-9 causes the bit map to be read out from OSD section 1513-3 of RAM 1513, and converts the color representative word for each pixel to the corresponding component representative group from the header. For this purpose, OSD display unit 1509-9 requests data from OSD section 1513-3 via memory controller 1509-3 as required. Since, in the present embodiment the graphic image component representative words contain only six or four bits while the video image representative words contain eight bits, OSD display unit 1509-9 converts the six/four-bit graphic image component representative words to eight-bit words by multiplying the six bit luminance words by four and the four bit chrominance words by sixteen. For example, if Y value was 0100111, then the converted 8-bit value would be 01011100. The generation of the graphic image component representative digital words by OSD display unit 1509-9 is also synchronized with the field (V), line (H) and pixel (PC) rate signals generated by television signal encoder 1515.

As earlier noted, the video image component representative groups generated by video image display unit 1509-5 represent video image information in a compressed form in which for every two pixels there are two respective luminance representative words and one pair of color difference representative words in a so-called 4:2:2 format. On the other hand, the graphic image component representative groups stored in OSD section 1513-3 of RAM 1513 and generated by OSD display unit 1509-9 represent graphics image information in an uncompressed form in which for every one pixel there is one luminance representative word and one pair of color difference representative words (orfor every two pixels there are two respective luminance representative words and two respective pairs of color difference representative words). The latter uncompressed format has become known as the "4:4:4" format in the digital video signal processing field. The 4:4:4 graphics image sequence is desirable since it allows as many colors as possible to be defined with a given number of bits because it provides for a unique luminance component and two unique color difference components for each pixel of graphics. However, the 4:4:4 graphic image sequence is not compatible with the 4:2:2 video image sequence and cannot be readily combined with it to so as to insert a graphic image into a video image.

To solve this problem, video decoder 1509 includes an OSD converter 1509-11 for converting the 4: 4:4 sequence used for the graphic image components to the 4:2:2 sequence used for the video image components. As is pictorially indicated in Figure 12, for every two graphics pixels, converter 1509-11 selects the pair of color difference components for the first pixel and deletes the pair for the second pixel.

As shown in Fig. 12, an OSD/video combiner 1509-13 combines, word-by-word, video image component representative words provided by video image display unit 1509-5 with graphic image component representative words provided by OSD converter 1509-11 under the control of OSD display unit 1509-9. In a video image only mode of operation, combiner 1509-13 selects only the video image groups. In a graphic image only mode of operation, combiner 1509-13 selects only the graphic image groups. In a "superimpose" mode of operation, in which the graphic image is "mixed" with a video image, combiner 1509-13 mixes the video image groups with the graphic image groups on a pixel by pixel basis such that the graphic image overlays the video image in a semitransparent manner. The 4:2:2 output sequence of component representative words produced by output multiplexer 1509-13 is coupled to television signal encoder 306.

Figure 13 depicts a block diagram of the OSD/ - video combiner 1509-13 in accordance with the present invention. The combiner contains a mixer 400, a first multiplexer402, and a second multiplexer 404. The mixer combines the video words with the OSD graphics words to produce a "blended" or "mixed" output. This output combines the two input words in accordance with the "mix weight" supplied by the OSD display unit.

The multiplexers 402 and 404 form an output selector 406 that is used to select various operational modes for the OSD arrangement. Specifically, the first multiplexer 402 selects either the blended output or the video word in response to an OSD enable signal provided by the OSD display unit. If the OSD is enabled (e.g., OSD active signal is "high"), the multiplexer 402 connects the blended output value to its output terminal. On the other hand, if the OSD is disabled (e.g., OSD active signal is "low"), the multiplexer 402 connects the video data to its output terminal. The second multiplexer is controlled by a transparency enable signal.

In operation, if the OSD enable signal indicates the OSD is disabled, then the video word passes through both multiplexers 402 and 404 unimpeded. However, if the OSD is enabled, the blended output is supplied by the first multiplexer 402 to one input of the second multiplexer 404. The other input to the second multiplexer 404 is connected to the OSD graphics word input. As such, when OSD is enabled, the second multiplexer404 selects, in response to the transparency enable signal, eitherthe original OSD word or the blended output. Judicious use of the transparency enable signal allows a given graphic to contain a mixture of opaque and transparent pixels. Thus, for any given pixel, the video information can be used to form a display (video image only mode), the OSD information can be used to form a display (graphic image mode), or the blended output can be used to form a display.

Figs. 4-5 show a flow chart of a control program which may be executed by either the CPU 1112 of Fig. 1, Controller 115 of Fig. 2 or ARM microprocessor of Fig. 3 to implement the features according to aspects of the present invention. A person skilled in the art would readily recognize that the control program when executed by any one of the systems described in Figs. 1-3 will provide the same features in accordance with the present invention. Therefore, to avoid redundancy, the control program will be described below only with respect to the exemplary hardware implementation shown in Fig. 3.

As indicated at step 410 of Fig. 4, when a user turns on the system shown in Fig. 3, the system will typically first display a video image of a program previously selected by the user for viewing. The user then may press for example, a "GUIDE" button (not shown) on a user control unit 314 to display a program guide, as shown at step 420.

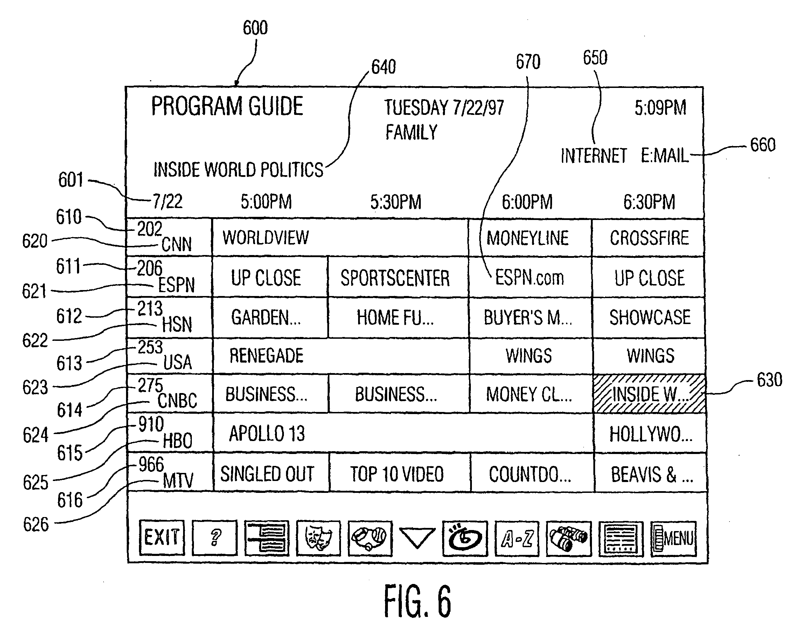

In our exemplary embodiment and shown at step 430, upon detecting this user request, the ARM microprocessor 315 in the transport unit 303 processes the program guide data information obtained from the input source 10 and formats the guide data information into OSD pixel data corresponding to a full "grid guide" as shown in Fig. 6. The OSD pixel data from the transport unit 303 is forwarded to the MPEG audio/video decoder 304 for generating the guide image, as described above in connection with Figs. 12 and 13.

The "grid guide" 600 typically occupies the whole screen of a display. The grid guide shows a program schedule in a time-and-channel format, similar to a TV schedule listed in a newspaper. In particular, one dimension (e.g., horizontal) of the guide shows the time information while the other dimension (e.g., vertical) of the guide shows the channel information. The time information is conveyed to the user by having a time line 601 on the top portion of the guide and is demarked by half hour intervals. The channel information is conveyed to the user by channel numbers 610 - 616 and corresponding channel station names 620 - 626. In each grid, due to space limitation, only a portion of the title for a program that may fit into a particular grid is displayed. For example, as shown in Fig. 6, only "Inside W..." is displayed in grid 630.

By highlighting a particular program using user control unit 314, however, a user may display the full title name on the top banner 640 of the guide 600. For example, the top banner 640 may display "'Insider World Politics' (NR)" which corresponds to the full title with rating of the abbreviated title displayed in grid 630, when grid 630 is highlighted by a user, as shown in Fig. 6

In addition, the program guide 600 contains icons Internet 650 and Email 660. By clicking on these icons, a user can surf the internet and send/receive email through the communication interface unit 116. In addition, an internet web site icon may also be incorporated into a grid of a program guide. For example, by clicking on "ESPN.com" within icon 670, the user will automatically be linked to, for example, an ESPN web site.

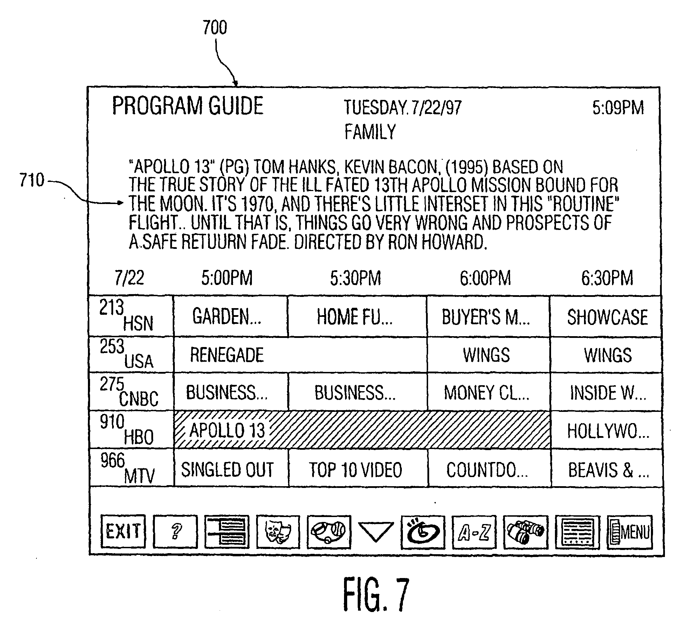

If a user wants to display another format of the program guide according to another aspect of the present invention, the GUIDE button, for example, is pressed again, as shown at step 440. Upon detecting this user request, the ARM microprocessor 513 will further process the full grid guide shown in Fig. 6 to display a modified guide as shown in Fig. 7, and indicated in step 450. The modified guide corresponds to a "detail guide" 700 shown in Fig. 7. Detail guide 700 is a truncated version of the full grid guide 600 shown in Fig. 6. In particular, the detail guide 700 is derived by ARM microprocessor 315 selectively deleting or truncating a discrete number of channels from the top of the full guide 600, along the channel information dimension of the guide. The ARM microprocessor 315 generates the OSD pixel data corresponding to the detail guide shown in Fig. 7 and route the OSD data to the MPEG decoder 304, for generating the guide image shown in Fig. 7

In addition, a detailed description of a program currently being highlighted is also displayed on the top information banner 710 of the guide 700. The information banner 710 occupies an area vacated by the truncation of the guide 600. The detailed description of the program may include, for example, the title, rating, and a description of the program. The ARM microprocessor 315 obtains the detail information from the program guide data received in the input datastream, as described above. A user, therefore may be able to use this detail guide to obtain detailed information of a program simply by highlighting a program the user is interested in, with user control unit 314.

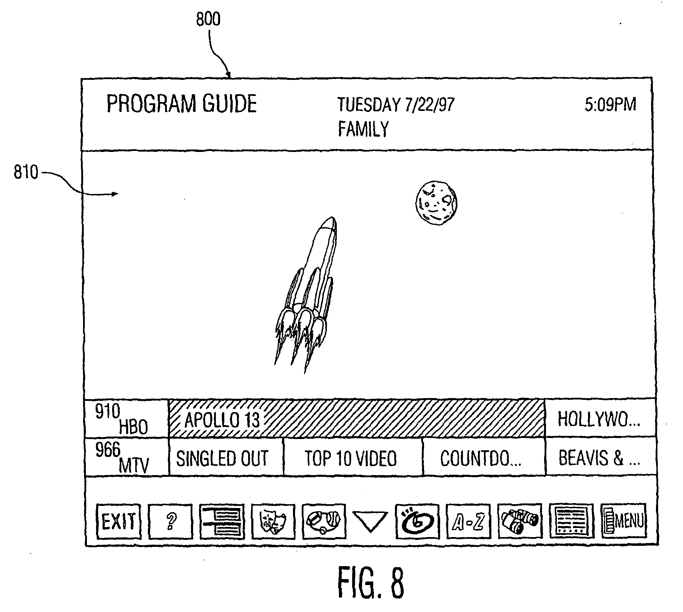

In addition, a user may replace the detailed description in the information banner 710 with a video image 810 corresponding to a program being highlighted, as shown in Fig. 8. As indicated at step 451 of Fig. 4, when the ARM microprocessor 315 detects, for example, a "VIDEO" button is being pressed by an user, the microprocessor 315 will then replace the detailed information 710 corresponding to a program selected with a live video image 810 corresponding to the same program, as shown at step 452. Similarly, when an "INFO" button is pressed as in step 453, the microprocessor 315 will replace the video image 810 with the detailed information 710 as indicated at step 454.

Furthermore, a user may selectively truncate or expand the detail guide 700 in discrete steps. As indicated in steps 456 and 457, when an down arrow button is pressed, the controller will further truncate the detail guide 700 in selected discrete intervals along the channel information dimension. For example, Fig. 8 shows a detail guide 800 which is a further truncated version of guide 700 by an additional three (3) channel grids. That is, three channel grids are truncated or deleted from the top of the guide along the channel information dimension so that an expanded amount of space may be used to display a video image 810, as shown in Fig. 8.

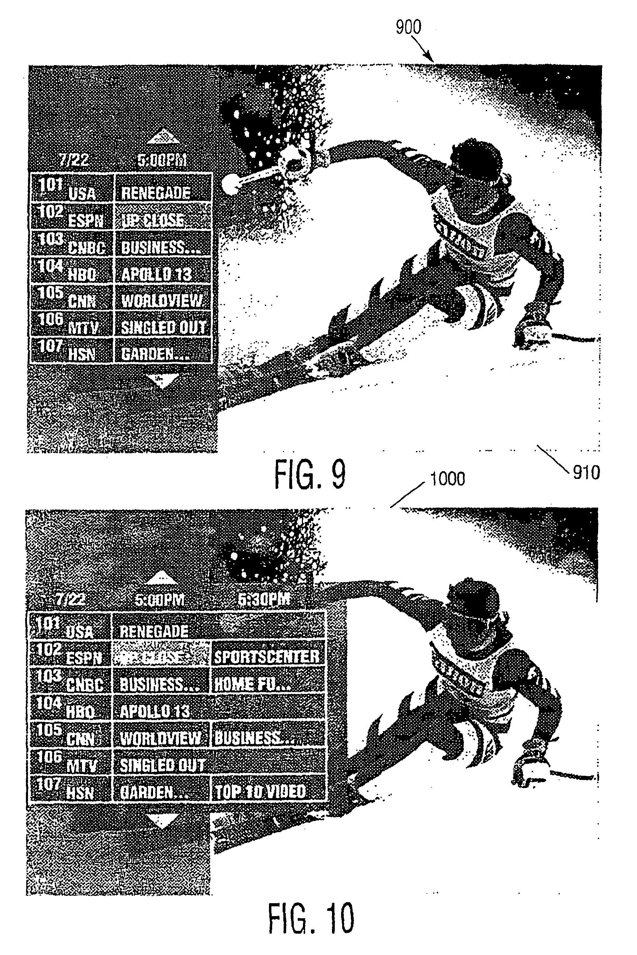

The user may request another format of a program guide by pressing "GUIDE" button again, as shown at step 460 in Fig. 4. Upon detecting this user request, the microprocessor 315 will again process the program guide data information received and provides the necessary OSD data corresponding to another version of a processed guide as shown in Fig. 9, and indicated at step 500 of Fig. 5. This modified guide corresponds to a "surf guide" 900 shown in Fig. 9. Surf guide 900 is a reduced or truncated version of the full grid guide 600 shown in Fig. 6. In particular, the surf guide 900 is derived by microprocessor 315 selectively deleting or truncating a discrete number of time intervals from the right of the full guide 600, along the time information dimension of the guide.

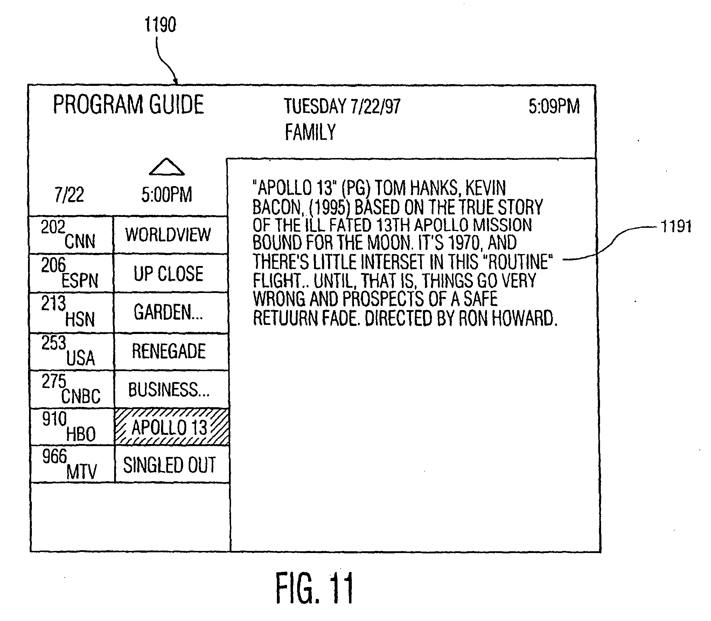

In addition, a user may select either a video image 910 as shown in Fig. 9 or a detailed description 1191 as shown in Fig. 11 of a program highlighted, to be displayed concurrently with the surf guide 900. The user can switch between these two formats shown in Fig. 9 and Fig. 11 by pressing "VIDEO" or "INFO" button respectively as shown at steps 530 - 545 of Fig. 5.

Furthermore, a user may selectively truncate or expand the surf guide in discrete steps. As indicated at steps 510-525, when a right arrow button is pressed, the controller will expand the surf guide 900 in selected discrete interval along the time information dimension, as shown in Fig. 10. On the other hand, by pressing the left arrow button, a user may again truncate the surf guide 1000 by another selected discrete interval along the time information dimension, so the surf guide 900 may appear again as shown in Fig. 9.

Another aspect of the present invention relates to displaying a program guide in translucent format, as shown, for example, in Figs. 9 and 10. The capability to display transparent OSD/program guide images by the exemplary embodiment of Fig. 3 has been previously described in connection with Figs. 12 and 13.

The advantages of displaying a program guide in translucent format is clearly illustrated in these figures in which a full image of a video corresponding to a highlighted program may be displayed concurrently in the background of a translucent program guide. By displaying the program guide translucently, a video image may be displayed in full size without having to be reduced or reformatted into a different aspect ratio. Therefore, the viewer may see the video image more clearly, and the system saves resources by eliminate the hardware and software needed to further process the video image received.

It is to be understood that the embodiments and variations shown and described herein are for illustration only and that various modifications may be implemented by those skilled in the art without departing from the scope of the invention.

## Claims

1. A method of processing program guide data received at a receiver, comprising the steps of:
producing a first signal derived from the program guide data, the first signal representing a program guide in a first display format, the first display format comprising successive time intervals along one dimension and a plurality of channels along another dimension; and
producing a second signal representing the program guide in a second display format in response to a control signal caused by a user of the receiver, the second display format being a truncated version of the first display format comprising fewer channels than the first display format, wherein the second display format can be truncated further by an additional number of channels in response to a user input.

2. The method of claim 1, further comprising the step of:
including a video image of a selected program with the program guide in the second format.

3. The method of claim 2 wherein the program' guide in the second format is displayed translucently.

4. The method of claim 1, further comprising the step of:
including a detailed description of a selected program with the program guide in the second format.

5. A method of processing program guide data received at a receiver, comprising the steps of:
producing a first signal derived from the program guide data, the first signal representing a program guide in a first display format, the first display format comprising successive time intervals along one dimension and a plurality of channels along another dimension; and
producing a second signal representing the program guide in a second display format in response to a control signal caused by a user of the receiver, the second display format being a truncated version of the first display format comprising fewer time intervals than the first display format, and wherein the second display formatcan be further truncated by a number of time intervals in response to a user input.

6. The method of claim 5, further comprising the step of:
including a video image of a selected program with the program guide in the second format.

7. The method of claim 5, further comprising the step of:
including a detailed description of a selected program with the program guide in the second format.

8. The method of claim 6 wherein the program guide in the second format is displayed translucently.

9. A method of processing program guide data received at a receiver, comprising the steps of:
producing a first signal derived from the program guide data, the first signal representing a program guide in a first display format, the first display format comprising successive time intervals along one dimension and a plurality of channels along another dimension;
producing a second signal representing the program guide in a seconddisplay format in response to a first control signal caused by a user of the receiver, the second display format being a truncated version of the first display format comprising fewer time intervals than the first display format wherein the second display format can be truncated further by a number of time intervals in response to a user input; and
producing a third signal representing the program guide in a third display format in response to a second control signal caused by the user of the receiver, the second display format being a truncated version of the first display format comprising fewer channels than the first display format wherein the third display format can be truncated further by an additional number of channels in response to a user input.

10. The method of claim 9 further comprising the step of:
including a video image of a selected program with the program guide in the second format.

11. The method of claim 9, further comprising the step of:
including a detailed description of a selected program with the program guide in the second format.

12. The method of claim 9 further comprising the step of:
including a video image of a selected program with the program guide in the third format.

13. The method of claim 9, further comprising the step of:
including a detailed description of a selected program with the program guide in the third format.

14. The method of claim 9, further comprising the step of:
producing the first signal representing the program guide in a first format in response to a third control signal caused by the user of the receiver.

15. An apparatus for receiving and processing program guide data information, comprising:
a controller for processing the program guide data information and generating a first signal suitable for coupling to a display device for displaying a program guide in a first display format; the first display format comprising successive time intervals along one dimension and a plurality of channels along another dimension;
a user control unit for generating a user control signal in response to a request by a user of the apparatus; and
the controller, in response to the user control signal, generates a second signal representing the program guide in a second display format, the second display format being a truncated version of the first display format comprising fewer channels than the first display format, wherein the second display format can be truncated further by an additional number of channels in response to a user input.

16. The apparatus of claim 15, wherein the second signal includes a video image of a selected program.

17. The apparatus of claim 15, wherein the second signal includes a detailed description of a selected program.

18. An apparatus for receiving and processing program guide data information, comprising:
a controller for processing the program guide data information and generating a first signal suitable for coupling to a display device for displaying a program guidein a first display format; the first display format comprising successive time intervals along one dimension and a plurality of channels along another dimension;
a user control unit for generating a user control signal in response to a request by a user of the apparatus: and
the controller, in response to the user control signal, generates a second signal representing the program guide in a second display format, the second display format being a truncated version of the first display format comprising fewer time intervals than the first display format, wherein the second display format can be truncated further by a number of time intervals in response to a user input.

19. The apparatus of claim 18, wherein the second signal includes a video image of a selected program.

20. The apparatus of claim 18, wherein the second signal includes a detailed description of a selected program.

21. The apparatus of claim 18 wherein:
the user control unit generates a second user control signal in response to a second request by the user of the apparatus; and
the controller, in response to the second user control signal, generates a third signal representing the program guide in a third format, the third format comprising fewer channels than the first format.

22. The method of claim 1 wherein the second format also comprises fewer time intervals than the first format.

## Patentansprüche

1. Verfahren zur Verarbeitung von bei einem Empfänger empfangenen Programmführerdaten mit folgenden Schritten:
Erzeugung eines aus den Programmführerdaten abgeleiteten ersten Signals, wobei das erste Signal einen Programmführer in einem ersten Anzeigeformat darstellt, wobei das erste Anzeigeformat aufeinander folgende Zeitintervalle in einer Richtung und mehrere Kanäle in einer anderen Richtung enthält, und
Erzeugung eines den Programmführer in einem zweiten Anzeigeformat darstellenden zweiten Signals aufgrund eines Steuersignals, das durch einen Benutzer des Empfängers ausgelöst wird, wobei das zweite Format eine gekürzte Version des ersten Anzeigeformats ist und weniger Kanäle als das erste Anzeigeformat beinhaltet, wobei das zweite Anzeigeformat weiter verkürzt werden kann durch eine zusätzliche Anzahl von Kanälen als Folge einer Benutzereingabe.

2. Verfahren nach Anspruch 1, mit folgendem Schritt:
Aufnahme eines Videobildes eines gewählten Programms mit dem Programmführer in dem zweiten Format.

3. Verfahren nach Anspruch 2, wobei der Programmführer in dem zweiten Format durchscheinend wiedergegeben wird.

4. Verfahren nach Anspruch 1, mit folgendem Schritt:
Aufnahme einer detaillierten Beschreibung eines gewählten Programms mit dem Programmführer in dem zweiten Format.

5. Verfahren zur Verarbeitung von Programmführerdaten, die von einem Empfänger empfangenen wurden und die folgenden Schritten beinhalten:
Erzeugung eines aus den Programmführerdaten abgeleiteten ersten Signals, wobei das erste Signal einen Programmführer in einem ersten Anzeigeformat darstellt, das erste Anzeigeformat aufeinander folgende Zeitintervalle entlang einer Richtung und mehrere Kanäle entlang einer anderen Richtung enthält, und
Erzeugung eines zweiten Signals, das den Programmführer in einem zweiten Anzeigeformat darstellt, aufgrund eines Steuersignals, das durch einen Benutzer des Empfängers ausgelöst wird, wobei das zweite Format eine gekürzte Version des ersten Anzeigeformats ist und weniger Zeitintervalle als das erste Format enthält und wobei das zweite Anzeigeformat weiter durch eine Anzahl von Zeitintervallen, als Folge einer Benutzereingabe, verkürzt werden kann.

6. Verfahren nach Anspruch 5 mit folgendem Schritt:
Aufnahme eines Videobildes eines gewählten Programms mit dem Programmführer in dem zweiten Format.

7. Verfahren nach Anspruch 5 mit folgendem Schritt:
Aufnahme einer detaillierten Beschreibung eines gewählten Programms mit dem Programmführer in dem zweiten Format.

8. Verfahren nach Anspruch 6, wobei der Programmführer in dem zweiten Format durchscheinend abgebildet wird.

9. Verfahren zur Verarbeitung von bei einem Empfänger empfangenen Programmführerdaten mit folgenden Schritten:
Erzeugung eines aus den Programmführerdaten abgeleiteten ersten Signals, wobei das erste Signal einen Programmführer in einem ersten Format darstellt, das erste Format aufeinanderfolgende Zeitintervalle entlang einer Richtung und mehrere Kanäle entlang einer anderen
Richtung enthält,
Erzeugung eines den Programmführer in einem zweiten
Anzeigeformat darstellenden zweiten Signals aufgrund eines ersten Steuersignals, das durch einen Benutzer des Empfängers ausgelöst wird, wobei das zweite Anzeigeformat eine gekürzte Version des ersten Anzeigeformats ist und weniger Zeitintervalle als das erste Format enthält und wobei das zweite Anzeigeformat weiter durch eine Anzahl von Zeitintervallen, als Folge einer Benutzereingabe, verkürzt werden kann; und
Erzeugung eines den Programmführer in einem dritten Anzeigeformat darstellenden dritten Signals aufgrund eines zweiten Steuersignals, das durch den Benutzer des Empfängers ausgelöst wird, wobei das zweite Format weniger Kanäle als das erste Format enthält, wobei das zweite Anzeigeformat eine gekürzte Version des ersten Anzeigeformats ist und weniger Kanäle als das erste Anzeigeformat beinhaltet, wobei das dritte Anzeigeformat weiter verkürzt werden kann durch eine zusätzliche Anzahl von Kanälen als Folge einer Benutzereingabe.

10. Verfahren nach Anspruch 9 mit folgendem Schritt:
Aufnahme eines Videobildes eines gewählten Programms mit dem Programmführer in dem zweiten Format.

11. Verfahren nach Anspruch 9 mit folgendem Schritt:
Aufnahme einer detaillierten Beschreibung eines gewählten Programms mit dem Programmführer in dem zweiten Format.

12. Verfahren nach Anspruch 9 mit folgendem Schritt:
Aufnahme eines Videobildes eines gewählten Programms mit dem Programmführer in dem dritten Format.

13. Verfahren nach Anspruch 9 mit folgendem Schritt:
Aufnahme einer detaillierten Beschreibung eines gewählten Programms mit dem Programmführer in dem dritten Format.

14. Verfahren nach Anspruch 9 mit folgendem Schritt:
Erzeugung des den Programmführer in einem ersten Format darstellenden ersten Signals aufgrund eines dritten Steuersignals, das durch den Benutzer des Empfängers ausgelöst wird.

15. Vorrichtung zum Empfang und zur Verarbeitung von Programmführerdaten-Informationen mit:
einer Steuereinheit zur Verarbeitung der Programmführerdaten-Informationen und zur Erzeugung eines ersten Signals, das für die Zuführung zu einem Anzeigegerät zur Anzeige eines Programmführers in dem ersten Anzeigeformat geeignet ist, wobei das erste Format aufeinander folgende Zeitintervalle entlang einer ersten Richtung und mehrere Kanäle entlang einer anderen Richtung enthält,
eine Benutzer-Steuereinheit zur Erzeugung eines Benutzer-Steuersignals aufgrund einer Anforderung durch einen Benutzer der Vorrichtung und
wobei die Steuereinheit aufgrund des Benutzer-Steuersignals ein zweites Signal erzeugt, das den Programmführer in einem zweiten Anzeigeformat darstellt, wobei das zweite Anzeigeformat eine gekürzte Version des ersten Anzeigeformats ist und weniger Kanäle als das erste Anzeigeformat beinhaltet, wobei das zweite Anzeigeformat weiter verkürzt werden kann durch eine zusätzliche Anzahl von Kanälen als Folge einer Benutzereingabe.

16. Vorrichtung nach Anspruch 15, wobei das zweite Signal ein Videobild eines gewählten Programms enthält.

17. Vorrichtung nach Anspruch 16, wobei das zweite Signal eine detaillierte Beschreibung eines gewählten Programms enthält.

18. Vorrichtung zum Empfang und zur Verarbeitung von Programmführerdaten-Informationen mit:
Einer Steuereinheit zur Verarbeitung der Programmführerdaten-Informationen und zur Erzeugung eines ersten Signals, das für die Zuführung zu einem Anzeigegerät zur Darstellung eines Programmführers in einem ersten Anzeigeformat geeignet ist, wobei das erste Format aufeinander folgende Zeitintervalle entlang einer Richtung und mehrere Kanäle entlang einer anderen Richtung enthält,
eine Benutzer-Steuereinheit zur Erzeugung eines Benutzer-Steuersignals aufgrund einer Anforderung durch einen Benutzer der Vorrichtung und
wobei die Steuereinheit aufgrund des Benutzer-Steuersignals ein zweites Signal erzeugt, das den Programmführer in einem zweiten Anzeigeformat darstellt, und das zweite Format eine gekürzte Version des ersten Anzeigeformats ist und weniger Zeitintervalle enthält als das erste Format, wobei das zweite Anzeigeformat weiter verkürzt werden kann durch eine Anzahl von Zeitintervallen als Folge einer Benutzereingabe.

19. Vorrichtung nach Anspruch 18, wobei das zweite Signal ein Videobild eines gewählten Programms enthält.

20. Vorrichtung nach Anspruch 18, wobei das zweite Signal eine detaillierte Beschreibung eines gewählten Programms enthält.

21. Vorrichtung nach Anspruch 18, wobei:
die Benutzer-Steuereinheit ein zweites Benutzer-Steuersignal aufgrund einer zweiten Anforderung durch den Benutzer der Vorrichtung erzeugt und
die Steuereinheit aufgrund des zweiten Benutzer-Steuersignals ein drittes Signal erzeugt, das den Programmführer in einem dritten Anzeigeformat darstellt, und das dritte Format weniger Kanäle enthält als das erste Format.

22. Verfahren nach Anspruch 1, wobei das zweite Format außerdem weniger Zeitintervalle als das erste Format enthält.

## Revendications

1. Un procédé de traitement des données d'un guide des programmes reçues par un récepteur comprenant les étapes de :
production d'un premier signal dérivé des données du guide des programmes, le premier signal représentant un guide des programmes dans un premier format d'affichage, le premier format d'affichage comprenant des intervalles de temps successifs sur un axe et plusieurs chaînes sur un autre axe ; et
production d'un second signal représentant le guide des programmes dans un second format d'affichage en réponse à un signal de commande provoqué par un utilisateur du récepteur, le second format d'affichage étant une version tronquée du premier format d'affichage comprenant moins de chaînes que le premier format d'affichage, où le second format d'affichage peut encore être tronqué d'autres chaînes suite à une entrée utilisateur.

2. Le procédé de la revendication 1, comprenant en outre l'étape de :
intégration d'une image vidéo d'un programme sélectionné avec le guide des programmes dans le second format.

3. Le procédé de la revendication 2 dans lequel le guide des programmes dans le second format est affiché de manière translucide.

4. Le procédé de la revendication 1 comprenant en outre l'étape de :
intégration d'une description détaillée d'un programme sélectionné avec le guide des programmes dans le second format.

5. Un procédé de traitement des données d'un guide des programmes reçues par un récepteur comprenant les étapes de :
production d'un premier signal dérivé des données du guide des programmes, le premier signal représentant un guide des programmes dans un premier format d'affichage, le premier format d'affichage comprenant des intervalles de temps successifs sur un axe et plusieurs chaînes sur un autre axe ; et
production d'un second signal représentant le guide des programmes dans un second format d'affichage en réponse à un signal de commande provoqué par un utilisateur du récepteur, le second format d'affichage étant une version tronquée du premier format d'affichage comprenant moins d'intervalles temps que le premier format d'affichage et où le second format d'affichage peut encore être tronqué d'autres intervalles de temps suite à une entrée utilisateur.

6. Le procédé de la revendication 5, comprenant en outre l'étape de :
intégration d'une image vidéo d'un programme sélectionné avec le guide des programmes dans le second format.

7. Le procédé de la revendication 5, comprenant en outre l'étape de :
intégration d'une description détaillée d'un programme sélectionné avec le guide des programmes dans le second format.

8. Le procédé de la revendication 6, dans lequel le guide des programmes dans le second format est affiché de manière translucide.

9. Un procédé de traitement des données d'un guide des programmes reçues par un récepteur comprenant les étapes de :
production d'un premier signal dérivé des données du guide des programmes, le premier signal représentant un guide des programmes dans un premier format d'affichage, le premier format d'affichage comprenant des intervalles de temps successifs sur un axe et plusieurs chaînes sur un autre axe ;
production d'un second signal représentant le guide des programmes dans un second format d'affichage en réponse à un premier signal de commande provoqué par un utilisateur du récepteur, le second format d'affichage étant une version tronquée du premier format d'affichage comprenant moins d'intervalles temps que le premier format d'affichage où le second format d'affichage peut encore être tronqué d'autres intervalles de temps suite à une entrée utilisateur ; et
production d'un troisième signal représentant le guide des programmes dans un troisième format d'affichage en réponse à un second signal de commande provoqué par l'utilisateur du récepteur, le second format d'affichage étant une version tronquée du premier format d'affichage comprenant moins de chaînes que le premier format d'affichage où le troisième format d'affichage peut encore être tronqué d'autres chaînes suite à une entrée utilisateur.

10. Le procédé de la revendication 9, comprenant en outre l'étape de :
intégration d'une image vidéo d'un programme sélectionné avec le guide des programmes dans le second format.

11. Le procédé de la revendication 9, comprenant en outre l'étape de :
intégration d'une description détaillée d'un programme sélectionné avec le guide des programmes dans le second format.

12. Le procédé de la revendication 9, comprenant en outre l'étape de :
intégration d'une image vidéo d'un programme sélectionné avec le guide
des programmes dans le troisième format.

13. Le procédé de la revendication 9, comprenant en outre l'étape de :
intégration d'une description détaillée d'un programme sélectionné avec le guide des programmes dans le troisième format.

14. Le procédé de la revendication 9, comprenant en outre l'étape de :
production du premier signal représentant le guide des programmes dans un premier format en réponse à un troisième signal de commande provoqué par l'utilisateur du récepteur.

15. Un appareil de réception et de traitement des informations relatives aux données du guide des programmes comprenant :
un contrôleur pour le traitement des informations relatives aux données du guide des programmes et la génération d'un premier signal adapté au couplage à un dispositif d'affichage pour l'affichage d'un guide des programmes dans un premier format ; le premier format d'affichage comprenant des intervalles de temps successifs sur un axe et plusieurs chaînes sur un autre axe ;
une unité de commande utilisateur pour la génération d'un signal de commande utilisateur en réponse à une requête de l'utilisateur de l'appareil ; et
le contrôleur, en réponse au signal de commande utilisateur génère un second signal représentant le guide des programmes dans un second format d'affichage, le second format d'affichage étant une version tronquée du premier format d'affichage comprenant moins de chaînes que le premier format d'affichage où le second format d'affichage peut encore être tronqué d'autres chaînes suite à une entrée utilisateur.

16. L'appareil de la revendication 15 dans lequel le second signal inclut une image vidéo d'un programme sélectionné.

17. L'appareil de la revendication 15 dans lequel le second signal inclut une description détaillée d'un programme sélectionné.

18. Un appareil de réception et de traitement des informations relatives aux données du guide des programmes comprenant :
un contrôleur pour le traitement des informations relatives aux données du guide des programmes et la génération d'un premier signal adapté au couplage à un dispositif d'affichage pour l'affichage d'un guide des programmes dans un premier format d'affichage ; le premier format d'affichage comprenant des intervalles de temps successifs sur un axe et plusieurs chaînes sur un autre axe ;
une unité de commande utilisateur pour la génération d'un signal de commande utilisateur en réponse à une requête d'un utilisateur de l'appareil ; et
le contrôleur, en réponse au signal de commande utilisateur génère un second signal représentant le guide des programmes dans un second format d'affichage, le second format d'affichage étant une version tronquée du premier format d'affichage comprenant moins d'intervalles de temps que le premier format d'affichage où le second format d'affichage peut encore être tronqué d'autres intervalles de temps suite à une entrée utilisateur.

19. L'appareil de la revendication 18 dans lequel le second signal inclut une image vidéo d'un programme sélectionné.

20. L'appareil de la revendication 18 dans lequel le second signal inclut une description détaillée d'un programme sélectionné.

21. L'appareil de la revendication 18 dans lequel :
l'unité de commande utilisateur génère un second signal de commande utilisateur en réponse à une seconde requête de l'utilisateur de l'appareil; et
le contrôleur, en réponse au second signal de commande utilisateur génère un troisième signal représentant le guide des programmes dans un troisième format, le troisième format comprenant moins de chaînes que le premier format.

22. Le procédé de la revendication 1, dans lequel le second format comprend également moins d'intervalles de temps que le premier format.
